# EUROPÄISCHE PATENTANMELDUNG

(11) **EP 1 832 467 A2**
(43) Veröffentlichungstag der Anmeldung: **12.09.2007**
(21) Anmeldenummer: 07002970.7
(22) Anmeldetag: 13.02.2007
(51) Int. Cl.: B60N 2/16

(54) **Fahrzeugsitz, insbesondere Kraftfahrzeugsitz**

(30) Priorität: 07.03.2006 DE 102006010421
(71) Anmelder: Recaro GmbH & Co. KG, 73230 Kirchheim/Teck (DE)
(72) Erfinder: Wulf, Sebastian, 75446 Wiernsheim (DE); Wiedemann, Helmut, 89155 Erbach (DE)
(74) Vertreter: Patentanwälte Hosenthien-Held und Dr. Held

(57) **Zusammenfassung**

Bei einem Fahrzeugsitz (1), insbesondere Kraftfahrzeugsitz, mit einer Basis (9), welche durch ihre Erstreckung in Fahrtrichtung eine Sitzlängsrichtung definiert, wenigstens einer an der Basis (9) wenigstens mittelbar angelenkten vorderen Schwinge (25), wenigstens einer an der Basis (9) angelenkten hinteren Schwinge (27), einem an der vorderen Schwinge (25) und an einer hinteren Schwingendrehachse (41) an der hinteren Schwinge (27) angelenkten Sitzrahmen (51), einem am Sitzrahmen (51) abgestützten Sitzkissen (21), welches mittels Bewegen von Schwingen (25, 27, 55) in seiner Höhe und/oder Neigung relativ zur Basis (9) einstellbar ist, und einer Lehne (4), die mittels eines eine Lehnenschwenkachse (6) definierenden Beschlags (5) am Sitzrahmen (51) angebracht ist, ist bei wenigstens einer einstellbaren Stellung des Sitzkissens (21) und/oder der Lehne (4) die hintere Schwingendrehachse (41) in Sitzlängsrichtung hinter der Lehnenschwenkachse (6) angeordnet.

## Beschreibung

Die Erfindung betrifft einen Fahrzeugsitz, insbesondere einen Kraftfahrzeugsitz, mit den Merkmalen des Oberbegriffs des Anspruches 1.

Bei bekannten Fahrzeugsitzen dieser Art definieren die Schwingen zusammen mit der Basis und dem Sitzrahmen ein Viergelenk. Durch Bewegen dieses Viergelenks kann die Höhe des Sitzrahmens und damit des Sitzkissens relativ zur Basis eingestellt werden. Die gewählten Geometrien begrenzen die Einstellbarkeit nach unten, d.h. die unterste Position des Hüftpunktes eines Insassens. Im Vergleich zu Fahrzeugsitzen ohne Einstellung der Höhe des Sitzkissens ist diese unterste Position noch recht hoch.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, dass die hintere Schwingendrehachse in Sitzlängsrichtung hinter der Lehnenschwenkachse angeordnet ist, und zwar bei wenigstens einer einstellbaren Stellung des Sitzkissens und/oder der Lehne, kann die hintere Schwinge eine sehr flache Ausrichtung einnehmen. Damit kommt der Hüftpunkt im Vergleich zu bekannten Fahrzeugsitzen sehr tief zu liegen. Es ist für das Absenken des Hüftpunktes von Vorteil, wenn die hintere Schwingendrehachse zugleich in Sitzlängsrichtung hinter dem hinteren Ende des Sitzkissens angeordnet ist. Die Absenkung des Hüftpunktes kann noch verbessert werden, indem eine das hintere Ende des Sitzkissens abstützende untere Quertraverse tiefer als die anderen, den Sitzrahmen mitdefinierenden Quertraversen vorgesehen ist. Die Absenkung des Hüftpunktes erlaubt eine sportlichere Ausgestaltung sowohl des Fahrzeugsitzes als auch des gesamten Fahrzeuges.

Es sind vorzugsweise verschiedene Möglichkeiten der Einstellung des Sitzkissens (Höhe und/oder Neigung), der Lehne (Neigung) oder des gesamten Fahrzeugsitzes (Sitzlängsposition) vorhanden, die jeweils einzeln oder in beliebiger Kombination verwirklicht sein können. Vorzugsweise erfolgt die jeweilige Einstellung motorisch, was komfortabler ist, es ist aber jeweils auch eine kostengünstigere manuelle Lösung möglich. Bei der motorischen Variante kann eine Geräuschbildung vermieden werden, indem der jeweilige Motorträger als Schwingungsabsorber ausgebildet wird, beispielsweise durch einen Einsatz von Verbundfaserstoffen.

Um an verschiedene Fahrzeugtypen anpassbar zu sein, ist die Basis und/oder der Sitzrahmen vorzugsweise breitenvariabel, beispielsweise indem der Fahrzeugsitz auf beiden Fahrzeugsitzseiten jeweils einen einheitlich Aufbau aufweist, und die beiden Seiten durch Querverbinder verbunden sind, welche in ihren Befestigungsmöglichkeiten oder ihren Abmessungen wählbar sind, gegebenenfalls beliebig ablängbar oder aus einem Satz verschiedenen langer Teile auswählbar sind.

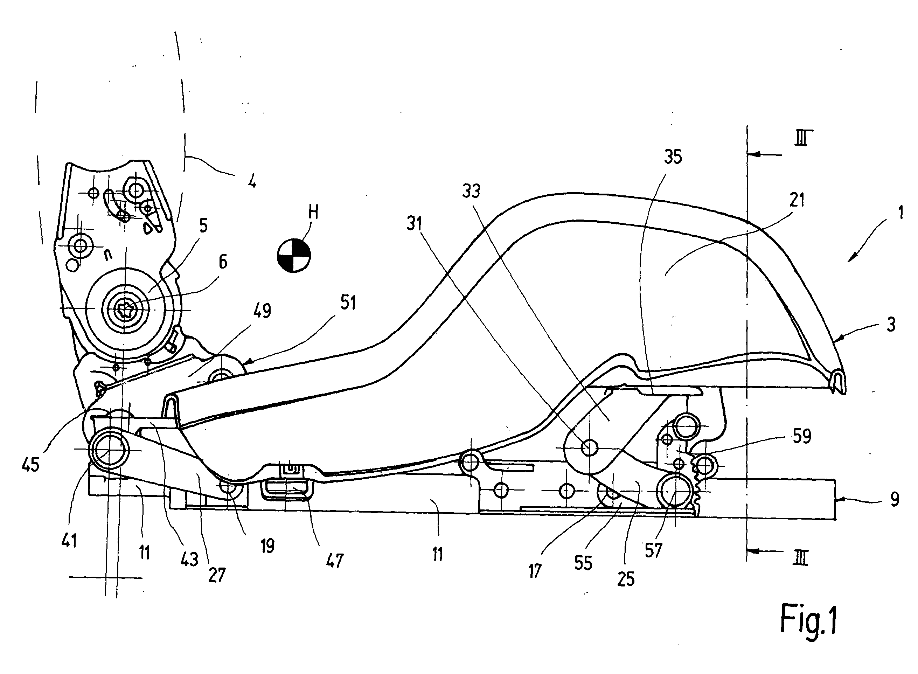

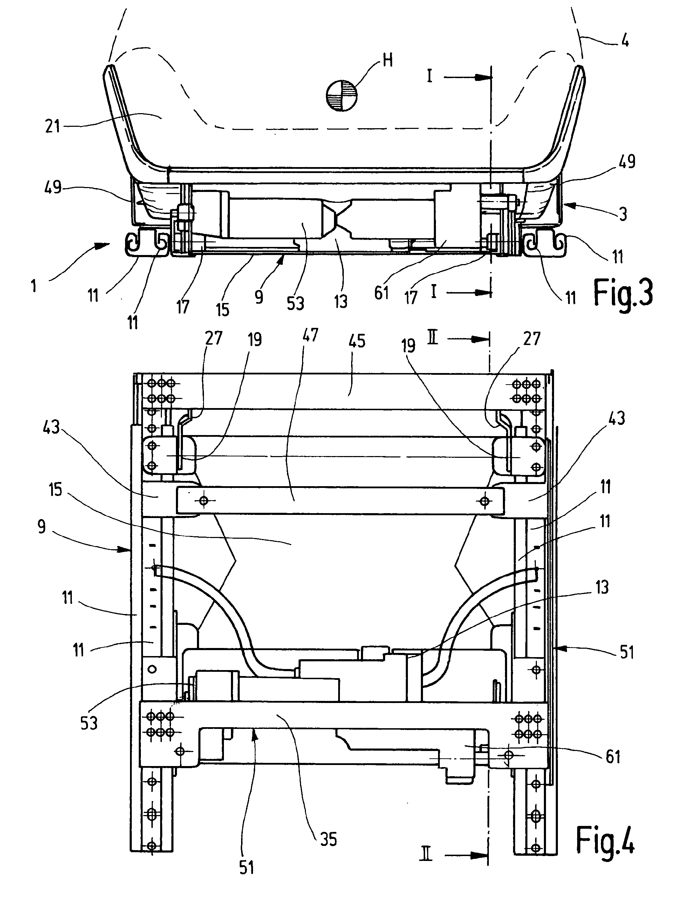

Im folgenden ist die Erfindung anhand eines in der Zeichnung dargestellten Ausführungsbeispiels näher erläutert. Es zeigen
- Fig. 1: einen Längsschnitt durch das Ausführungsbeispiel entlang der Linie I-I in Fig. 3, wobei die Lehne nur angedeutet ist,

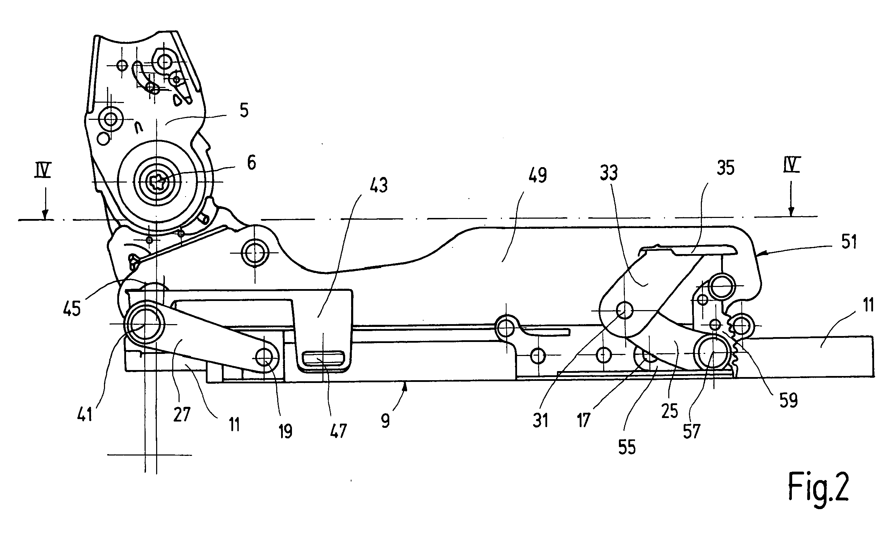

- Fig. 2: einen Schnitt entsprechend Fig. 1 ohne Sitzkissen und ohne Lehne entlang der Linie II-II in Fig. 4,
- Fig. 3: einen Querschnitt durch das Ausführungsbeispiel entlang der Linie III-III in Fig. 1, wobei die Polsterung des Sitzkissens und die Lehne nur angedeutet sind, und
- Fig. 4: einen Horizontalschnitt entlang der Linie IV-IV in Fig. 2.

Ein Fahrzeugsitz 1 ist als Vordersitz für ein Kraftfahrzeug vorgesehen. Der Fahrzeugsitz 1 umfasst ein Sitzteil 3 und eine Lehne 4, welche vorliegend mittels Beschlägen 5 beidseitig am Sitzteil 3 angebracht und relativ zu diesem um eine Lehnenschwenkachse 6 schwenkbar ist, vorliegend neigungseinstellbar (manuell oder motorisch) und freischwenkbar ist. Soweit die Beschläge 5 Getriebebeschläge sind, bei denen zwei Beschlagteile eine Drehbewegung mit überlagerter Taumelbewegung relativ zueinander ausführen, ist die Lehnenschwenkachse 6 durch das Zentrum des oberen Beschlagteils definiert, was vorliegend mit der Schwenkachse für das zentrische Freischwenken zusammenfällt.

Das Sitzteil 3 weist eine mit der Fahrzeugstruktur verbundene, durch ihre Erstreckung in Fahrtrichtung eine Sitzlängsrichtung definierende Basis 9 auf, vorliegend zwei zueinander parallele Paare von Sitzschienen 11, die in an sich bekannter Weise zur Einstellung der Sitzlängsposition des Fahrzeugsitzes 1 in Sitzlängsrichtung relativ zueinander verschiebbar sind, vorliegend mittels eines im vorderen Bereich der Basis 9 (oder innerhalb der Sitzschienen 11) angeordneten Längseinstellermotors 13. Das Sitzteil 3 weist auch eine Grundplatte 15 auf, welche die jeweils oberen (wenn obere und untere Sitzschienen vorhanden sind) oder inneren (wenn seitlich angebrachte, äußere und innere Sitzschienen vorhanden sind) Sitzschienen 13 miteinander verbindet, Das Sitzteil 3 weist ferner an jeder Fahrzeugsitzseite ein vorderes Lager 17 und ein hinteres Lager 19 auf, die vorliegend als Bolzen ausgebildet und jeweils an der Grundplatte 15 einschließlich Abkröpfungen derselben angeformt oder an derselben oder an den oberen oder inneren Sitzschienen 13 angebracht sind. Die Grundplatte 15 kann in ihrer Abmessung oder ihren Befestigungen an verschiedene Abstände der Paare von Sitzschienen 13 anpassbar, d.h. breitenvariabel, sein. Anstelle der Grundplatte 15 können auch zwei oder mehr Quertraversen zwischen den Paaren von Sitzschienen 13 vorgesehen sein.

Das Sitzteil 3 weist ein Sitzkissen 21 auf, welches vorliegend aus einer Sitzschale aus Metall oder Kunststoff und einer in der Zeichnung nur angedeuteten Polsterung aus Schaumstoff samt Stoff- oder Lederbezug besteht. Zur Einstellung der Höhe des Sitzkissens 21 relativ zur Basis 9 weist das Sitzteil 3 auf jeder Fahrzeugsitzseite eine vordere Schwinge 25 und eine hintere Schwinge 27 auf. Die vordere Schwinge 25 ist mittels einer vorderen Schwingendrehachse 31 an einem Tragarm 33 angelenkt. Der Tragarm 33 ist an einer vorderen Quertraverse 35 angebracht oder angeformt und steht vorliegend schräg nach unten und hinten ab. Die vordere Quertraverse 35 kann in ihren Abmessungen oder Befestigungen, auch der Tragarme 33, an verschiedene Abstände der Paare von Sitzschienen 13 anpassbar, d.h. breitenvariabel, sein.

Die hintere Schwinge 27 ist mittels einer hinteren Schwingendrehachse 41 an einem Arm eines Adapters 43 angebracht. Der näherungsweise U-förmige Adapter 43 ist am gleichen Arm mittels einer hinteren Quertraverse 45 und an dem in Sitzlängsrichtung nach vorne versetzten Arm mittels einer unteren Quertraverse 47 jeweils mit dem Adapter 43 auf der anderen Fahrzeugsitzseite verbunden. Die hintere Quertraverse 45 und die untere Quertraverse 47 sind parallel zueinander und zur vorderen Quertraverse 35 angeordnet und können in ihren Abmessungen oder Befestigungen an verschiedene Abstände der Paare von Sitzschienen 13 anpassbar, d.h. breitenvariabel, sein. Die untere Quertraverse 47 ist in Sitzlängsrichtung zwischen der vorderen Quertraverse 35 und der hinteren Quertraverse 45 angeordnet. Die untere Quertraverse 47 ist tiefer (in Richtung der Gewichtskraft) als eine gedachte Ebene angeordnet, welche die vordere Quertraverse 35 und die hintere Quertraverse 45 miteinander verbindet. Vorliegend ist die untere Quertraverse 47 tiefer als jede der beiden anderen Quertraversen angeordnet.

Auf jeder Fahrzeugsitzseite sind der Adapter 43 und die vordere Quertraverse 35 mit ihrer Stirnseite fest mit einem Sitzrahmenseitenteil 49 verbunden. Die beiden Sitzrahmenseitenteile 49 und die Quertraverse 35 und 45 (und 47) definieren einen Sitzrahmen 51. Auf diesem Sitzrahmen 51 ist das Sitzkissen 21 abgestützt, indem das Sitzkissen 21 auf der vorderen Quertraverse 35 und der unteren Quertraverse 47 aufliegt. Das hintere Ende des Sitzkissens 21 ist dabei in Sitzlängsrichtung vor der hinteren Schwingendrehachse 41 angeordnet. Am hinteren Ende der Sitzrahmenseitenteile 49 sind jeweils die Beschläge 5 angebracht. Die Lehnenschwenkachse 6 ist vorliegend ebenfalls in Sitzlängsrichtung vor der hinteren Schwingendrehachse 41 angeordnet, und zwar in den meisten einstellbaren Stellungen des Sitzkissens 21 und der Lehne 4 recht deutlich und in einigen Stellungen noch in gewissem Maße. Die gewählte Anordnung der hinteren Schwingendrehachse 41 erlaubt eine flache, nahezu horizontale Ausrichtung der hinteren Schwinge 27 und trägt damit ebenso wie die gewählte Anordnung der mittleren Quertraverse 47 dazu bei, dass der Hüftpunkt H im Vergleich zu bekannten Fahrzeugsitzen sehr tief zu liegen kommt.

Die Höheneinstellung des Sitzkissens 21 erfolgt, indem im Bereich der vorderen Schwingendrehachse 31 zwischen einer der beiden vorderen Schwingen 25, vorzugsweise einem mit ihr drehfest verbundenem Zahnsegment, einerseits und der vorderen Quertraverse 35 als Bestandteil des Sitzrahmens 51 andererseits ein Antrieb wirksam ist. Der Antrieb schwenkt diese besagten Teile relativ zueinander, womit der Antrieb aufgrund der gelenkigen Kopplung der Schwingen 25 und 27 und des Sitzrahmens 51, d.h. der Bildung eines Viergelenks (auf jeder Fahrzeugsitzseite), und der gewählten Ausrichtung der Schwingen 25 und 27 den Sitzrahmen 51 und damit das Sitzkissen 21 anhebt oder absenkt. Eine Begrenzung ist beispielsweise durch Anschläge möglich. Vorzugsweise ist ein motorischer Antrieb vorgesehen, vorliegend ein an der vorderen Quertraverse 35 angebrachter Höheneinstellermotor 53 mit einer in das Zahnsegment greifenden Schnecke. Es kann aber auch ein manueller Antrieb, beispielsweise mit einem Schrittschaltwerk, vorgesehen sein. Der Antrieb kann auch zwischen anderen Getriebegliedern des Viergelenks wirksam sein.

In einer Vier-Wege-Ausführung sind die vorderen Schwingen 25 an den vorderen Lagern 17 (oder gegebenenfalls in Längsrichtung dazu versetzten Lagern) und die hinteren Schwingen 27 an den hinteren Lagern 19 angelenkt, d.h. die Basis 9 ist direkt ein Getriebeglied des besagten Viergelenks zur Einstellung der Höhe des Sitzkissens 21.

In der vorliegenden Sechs-Wege-Ausführung ist zusätzlich eine Einstellung der Neigung des Sitzkissens 21 vorgesehen. Hierzu sind zwar die hinteren Schwingen 27 an den hinteren Lagern 19 angelenkt. Jedoch ist jede der vorderen Schwingen 25 mit ihrem vorderen, unteren Ende an einer unteren Schwinge 55 an deren vorderen Ende angelenkt, so dass diese beiden Schwingen 25 und 55 relativ zueinander um eine untere Schwingendrehachse 57 schwenkbar sind. Die untere Schwinge 55 wiederum ist an ihrem hinteren Ende am vorderen Lager 17 angelenkt. Die vordere Schwinge 25 ist dadurch mittelbar an der Basis 9 angelenkt. Die Anordnung von Basis 9, Sitzrahmen 51 und Schwingen 25 und 55 ähnelt einem Kniehebel. Aus Bauraumgründen vorzugsweise auf der dem Antrieb für die Einstellung der Höhe des Sitzkissens 21 gegenüberliegenden Fahrzeugsitzseite ist zwischen einer der beiden unteren Schwingen 55, vorzugsweise einem mit ihr drehfest verbundenem Zahnsegment 59, und der Basis 9 ein Antrieb wirksam, welcher diese besagten Teile relativ zueinander schwenkt und damit das vordere Ende des Sitzkissens 21 anhebt oder absenkt, während aufgrund der gewählten Ausrichtung der Schwingen 27 und 55 und der Kopplung mittels des Sitzrahmens 51 das hintere Ende des Sitzkissens 21 gegenläufig bewegt wird. Vorzugsweise ist ein motorischer Antrieb vorgesehen, vorliegend ein an der Basis 9 angebrachter Neigungseinstellermotor 61 mit einer in das Zahnsegment 59 greifenden Schnecke. Es kann aber auch ein manueller Antrieb, beispielsweise mit einem Schrittschaltwerk, vorgesehen sein. Der Antrieb kann auch zwischen anderen Getriebegliedern der Kniehebelanordnung wirksam sein. Prinzipiell wäre es auch denkbar, dass das Sitzkissen 21 nur in seiner Neigung, aber nicht in seiner Höhe einstellbar ist.

### Bezugszeichenliste

- 1: Fahrzeugsitz
- 3: Sitzteil
- 4: Lehne
- 5: Beschlag
- 6: Lehnenschwenkachse
- 9: Basis
- 11: Sitzschiene
- 13: Längseinstellermotor
- 15: Grundplatte
- 17: vorderes Lager
- 19: hinteres Lager
- 21: Sitzkissen
- 25: vordere Schwinge
- 27: hintere Schwinge
- 31: vordere Schwingendrehachse
- 33: Tragarm
- 35: vordere Quertraverse
- 41: hintere Schwingendrehachse
- 43: Adapter
- 45: hintere Quertraverse
- 47: untere Quertraverse
- 49: Sitzrahmenseitenteil
- 51: Sitzrahmen
- 53: Höheneinstellermotor
- 55: untere Schwinge
- 57: untere Schwingendrehachse
- 59: Zahnsegment
- 61: Neigungseinstellermotor
- H: Hüftpunkt

## Patentansprüche

1. Fahrzeugsitz, insbesondere Kraftfahrzeugsitz, mit einer Basis (9), welche durch ihre Erstreckung in Fahrtrichtung eine Sitzlängsrichtung definiert, wenigstens einer an der Basis (9) wenigstens mittelbar angelenkten vorderen Schwinge (25), wenigstens einer an der Basis (9) angelenkten hinteren Schwinge (27), einem an der vorderen Schwinge (25) und an einer hinteren Schwingendrehachse (41) an der hinteren Schwinge (27) angelenkten Sitzrahmen (51), einem am Sitzrahmen (51) abgestützten Sitzkissen (21), welches mittels Bewegen von Schwingen (25, 27, 55) in seiner Höhe und/oder Neigung relativ zur Basis (9) einstellbar ist, und einer Lehne (4), die mittels eines eine Lehnenschwenkachse (6) definierenden Beschlags (5) am Sitzrahmen (51) angebracht ist, **dadurch gekennzeichnet, dass** bei wenigstens einer einstellbaren Stellung des Sitzkissens (21) und/oder der Lehne (4) die hintere Schwingendrehachse (41) in Sitzlängsrichtung hinter der Lehnenschwenkachse (6) angeordnet ist.

2. Fahrzeugsitz nach Anspruch 1, **dadurch gekennzeichnet, dass** die hintere Schwingendrehachse (41) in Sitzlängsrichtung hinter dem hinteren Ende des Sitzkissens (21) angeordnet ist.

3. Fahrzeugsitz nach Anspruch 1 oder 2, **dadurch gekennzeichnet, dass** der Sitzrahmen (51) zwei Sitzrahmenseitenteile (49), eine vordere Quertraverse (35), eine hintere Quertraverse (45) und eine in Sitzlängsrichtung zwischen der vorderen Quertraverse (35) und der hintere Quertraverse (45) angeordnete untere Quertraverse (47) umfasst, wobei das Sitzkissen (21) auf der vorderen Quertraverse (35) und der unteren Quertraverse (47) abgestützt ist.

4. Fahrzeugsitz nach Anspruch 3, **dadurch gekennzeichnet, dass** die untere Quertraverse (47) tiefer als eine gedachte Ebene angeordnet ist, welche die vordere Quertraverse (35) und die hintere Quertraverse (45) miteinander verbindet.

5. Fahrzeugsitz nach einem der vorhergehenden Ansprüche, **dadurch gekennzeichnet, dass** das Sitzkissen (21) in seiner Höhe und/oder Neigung motorisch einstellbar ist.

6. Fahrzeugsitz nach Anspruch 5, **dadurch gekennzeichnet, dass** der Höheneinstellermotor (53) und/oder der Neigungseinstellermotor (61) im vorderen Bereich der Basis (9) und/oder des Sitzrahmens (51) angeordnet ist.

7. Fahrzeugsitz nach einem der vorhergehenden Ansprüche, **dadurch gekennzeichnet, dass** die vordere Schwinge (25) mittels einer unteren Schwinge (55) an der Basis (9) angelenkt ist, insbesondere in der Anordnung eines Kniehebels.

8. Fahrzeugsitz nach einem der vorhergehenden Ansprüche, **dadurch gekennzeichnet, dass** die Sitzlängsposition des Fahrzeugsitzes (1) einstellbar ist, wofür die Basis (9) in Sitzlängsrichtung relativ zu einander verschiebbare Sitzschienen (11) aufweist.

9. Fahrzeugsitz nach Anspruch 8, **dadurch gekennzeichnet, dass** die Sitzlängsposition des Fahrzeugsitzes (1) motorisch einstellbar ist, wobei der Längseinstellermotor (13) insbesondere im vorderen Bereich der Basis (9) angeordnet ist.

10. Fahrzeugsitz nach einem der vorhergehenden Ansprüche, **dadurch gekennzeichnet, dass** die Basis (9) und/oder der Sitzrahmen (51) breitenvariabel ist.
